# FASCICULE DE BREVET EUROPEEN

(11) **EP 0 614 093 B1**
(45) Date de publication et mention de la délivrance du brevet: **10.06.1998**
(21) Numéro de dépôt: 94400466.2
(22) Date de dépôt: 04.03.1994
(51) Int. Cl.: G01S 17/74

(54) **Système d'identification à haut pouvoir discriminant**
Identifizierungssystem mit hohem Unterscheidungsvermögen
Identification system with high discriminating power

(30) Priorité: 05.03.1993 FR 9302585
(43) Date de publication de la demande: 07.09.1994
(73) Titulaire: THOMSON-CSF, 75008 Paris (FR)
(72) Inventeur: Defour, Martin, F-92402 Courbevoie Cédex (FR); Couderc, Georges, F-92402 Courbevoie Cédex (FR)
(74) Mandataire: Lincot, Georges

(56) Documents cités:
- EP-A- 0 187 086
- EP-A- 0 255 792
- DE-A- 3 113 154
- FR-A- 2 248 515
- US-A- 3 989 942
- US-A- 5 142 288

## Description

La présente invention se rapporte au domaine de la communication à distance, plus précisément au domaine de l'identification ami-ennemi d'un objet ou d'une cible potentielle dans un champ d'observation, et a pour objet un système ami-ennemi à haut pouvoir discriminant pour permettre une bonne protection contre les éventuelles intrusions extérieures.

Un système d'identification ami-ennemi, plus connu sous l'appellation IFF (initiales de "Identification of a Friend from a Foe" selon la terminologie anglo-saxonne), doit permettre à un interrogateur donné d'identifier, sans ambiguïté, un objet dans son champ d'observation comme ami ou comme ennemi. La procédure d'identification consiste à émettre un signal à partir de la station interrogatrice en direction de l'objet à identifier, puis, dans le cas d'un objet ami, à recevoir sur la station interrogatrice un signal de réponse codé provenant de cet objet.

Les systèmes IFF sont composés classiquement, d'une part, d'un émetteur et d'un récepteur pour l'interrogateur et, d'autre part, d'un récepteur-réémetteur constituant un répondeur pour les stations interrogées.

Grâce à son émetteur, l'interrogateur doit d'abord pouvoir désigner précisément une cible parmi les cibles potentielles de son champ d'observation. La cible désignée est alors interrogée aux fins d'identification à l'aide d'un message codé recueilli par son récepteur. Le répondeur renvoie une réponse codée ou surcodée, grâce à son réémetteur, vers le récepteur de l'interrogateur. Classiquement, les signaux codés de communication entre l'interrogateur et le répondeur sont véhiculés par des ondes radios, par des ondes radars ou par des ondes lumineuses cohérentes :
- les ondes radios et les ondes radar présentent des inconvénients importants du fait d'une directivité insuffisante de leur propagation dans l'espace, à savoir une faible discrétion à l'interrogation et à la réponse, et une très mauvaise capacité à la discrimination entre les différentes cibles potentielles lors de la désignation ; toutefois, elles offrent une grande souplesse d'utilisation, en particulier une grande capacité d'interopérabilité ;
- les solutions de type optronique (telles que celles décrites dans les brevets FR-2 378 404 et FR 2 602 346) ont un bon pouvoir de discrimination mais présentent, comme inconvénients, une grande difficulté au pointage de la cible et une faible capacité d'interopérabilité.

Il a déjà été proposé de coupler les deux types de solutions qui viennent d'être évoquées. Un IFF mixte de ce type assure théoriquement une désignation discriminante de la cible à interroger grâce à une source d'illumination laser très directive, une bonne réception dans le cas où un système optique grand champ équipant le répondeur, une procédure d'interrogation souple par ondes non directives (radio ou radar). Mais ces solutions cumulent les défauts précédents.

En particulier, les solutions optroniques, ou partiellement optroniques, qui mettent en oeuvre un faisceau de lumière cohérente très fin nécessitent une forte puissance, pour réaliser une désignation discriminante; et il reste très difficile, avec un faisceau très directif, de stabiliser le pointage de ce faisceau sur une cible mobile, et en particulier sur son récepteur d'lFF, pendant toute la durée de l'interrogation ou, pour le moins, de la désignation.

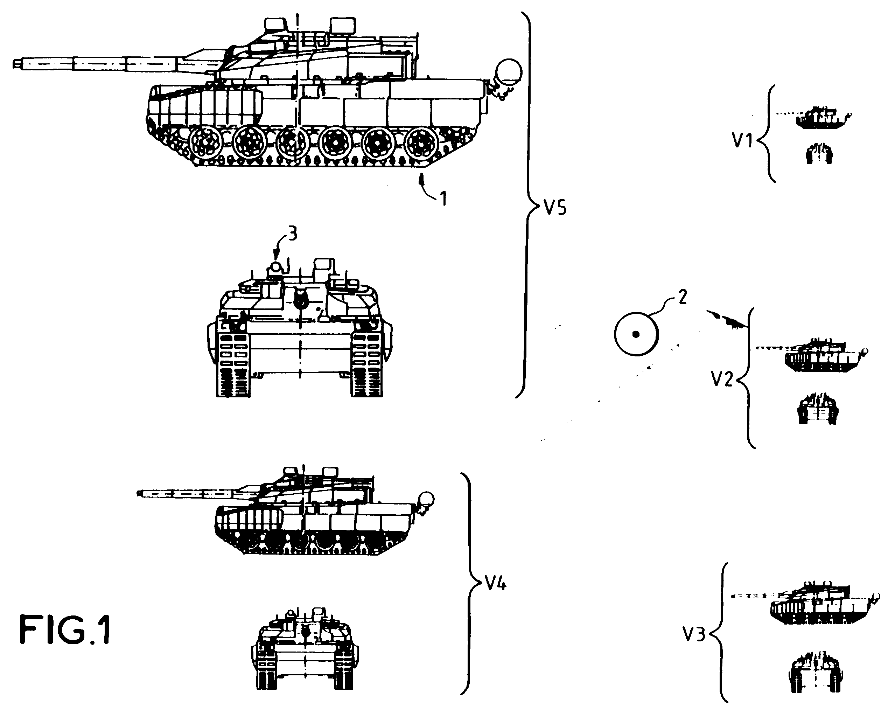

Ce problème est d'autant plus critique que la cible est proche. Pour illustrer ce fait par un exemple, la figure 1 montre quatre vues de face et de profil, V1 à V4, d'un char 1 à différentes distances, respectivement 5, 6 km ; 4 km ; 2,8 km 1,4 km et 1 km. Ces vues sont à comparer à la trace 2 du pointage laser que l'opérateur doit assurer sur le répondeur 3 du char, tout au long de la période d'interrogation. L'opérateur doit reconnaître le répondeur 3 et pointer le faisceau laser sur ce répondeur; ceci apparaît hautement délicat au vu des dimensions relatives entre le char et la trace du faisceau laser, notamment à courte distance lorsque la trace 2 devient petite par rapport à la surface du char, étant donnée la mobilité d'une telle cible.

Une source supplémentaire d'ambiguïté provient du fait que le pouvoir discriminant du faisceau d'illumination dépend de la sensibilité des récepteurs des cibles visées. En effet, ce pouvoir peut être défini en référence à la valeur de dépointage pour lequel un flux donné récolté par le récepteur du répondeur, atteint la limite de sensibilité du récepteur. Un faisceau est dit discriminant si son ouverture est inférieure ou égale à cette référence. Ainsi, lorsque plusieurs récepteurs de cibles du champ d'observation de l'interrogateur sont de sensibilités différentes, une cible plus sensible peut recevoir la procédure de désignation destinée en réalité à une autre cible moins sensible, ou placé dans un environnement affaiblissant sa sensibilité.

L'invention vise donc à réaliser un IFF ayant un haut pouvoir discriminant entre les cibles potentielles pendant toute la durée de l'interrogation , même lorsque les conditions d'utilisation, notamment la mobilité des cibles, entraînent une grande difficulté de pointage, de la cible à désigner.

Pour atteindre cet objectif, l'invention repose sur la mise en oeuvre d'une désignation par création de champs d'émission multiples, chacun de ces champs étant discriminant et pouvant se différencier des autres par un code spécifique.

Plus précisément, l'objet de l'invention concerne un système d'identification de type ami-ennemi à haut pouvoir discriminant, selon la revendication 1.

Le codage d'un champ de désignation par champ élémentaire permet de sélectionner une cible parmi plusieurs cibles équipées de répondeurs de sensibilités différentes. En effet, le faisceau codé reçu est maximal pour la localisation d'espace correspondant au champ élémentaire où se trouve la cible interrogée. Il n'est donc plus besoin de connaître la valeur absolue du flux interrogateur pour que seule la cible désignée réponde.

Par ailleurs, le codage spécifique utilisé peut être, de manière avantageuse, une information liée à la position de chaque faisceau discriminant. La cible désignée fournit alors en retransmettant cette information, à l'aide par exemple d'un réémetteur non directif de type radar ou radio, sa position relative à l'interrogateur.

D'autre part, un tel codage permet également d'interroger plusieurs cibles simultanément ou successivement.

Selon deux exemples de réalisation, l'émetteur laser peut être constitué par deux diodes laser mobiles ou par une seule diode laser associée à un système de balayage pour embrasser tout le champ de désignation.

Le système selon l'invention présente également l'avantage de ne pas nécessiter de puissance crête importante pour réaliser une désignation très discriminante. En effet, l'utilisation de la haute cadence impulsionnelle d'une diode laser permet de réaliser un grand nombre de champs élémentaires dans le champ d'analyse, et de cette façon d'avoir pour au moins l'un de ces champs un dépointage très faible avec le récepteur du répondeur.

D'autres caractéristiques et avantages de la présente invention apparaîtront à la lecture de la description qui suit, accompagnée de figures annexées représentant respectivement :
- la figure 1, des exemples de dimensions relatives d'un char vu de face à différentes distances (déjà commentée) ;
- la figure 2, un exemple de réalisation d'un système IFF selon l'invention mettant en oeuvre un premier exemple d'émetteur laser discriminant ;
- la figure 3, un deuxième exemple de réalisation d'un émetteur laser discriminant du système IFF selon l'invention.

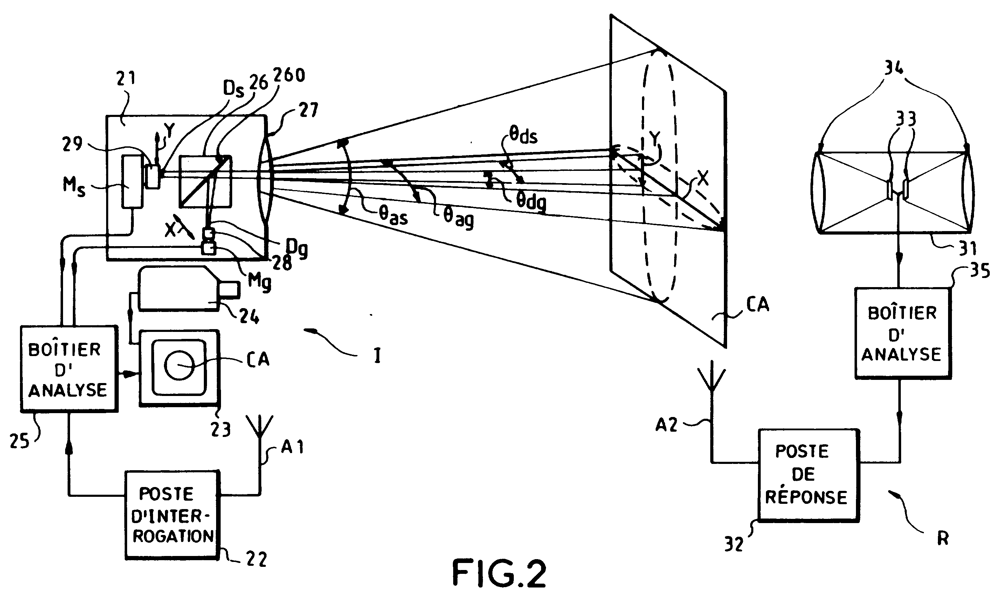

L'exemple de réalisation d'un système IFF selon l'invention, tel qu'illustré schématiquement à la figure 2, comprend un interrogateur I disposé sur une station interrogatrice et un répondeur R situé sur la cible amie interrogée.

L'interrogateur I se compose d'un émetteur de désignation laser 21 et d'un dispositif d'interrogation 22, constitué par exemple par un poste de radio de type connu sous l'appellation "PR4G". L'émetteur 21 et le dispositif d'interrogation 22 sont couplés à un dispositif de visualisation 23 d'un champ d'observation capté par exemple par une caméra thermique 24.

Le couplage est effectué par l'intermédiaire d'un boîtier d'analyse et de gestion 25 qui commande classiquement la procédure d'identification par désignation et interrogation, respectivement à l'aide de l'émetteur 21 et du poste 22, en fonction des données fournies par ces mêmes éléments et par le dispositif de visualisation 23. La structure connue du boîtier 25 n'est pas détaillée.

Selon l'invention, il est proposé de découper un champ d'analyse défini par l'émetteur de désignation 21 et visualisé sur le dispositif 23, en champs élémentaires discriminants. Pour cela, l'émetteur 21 comporte des moyens d'émission à source laser pour former des faisceaux laser élémentaires codés, occupant dans l'espace des champs élémentaires dont la réunion forme le champ d'analyse (CA).

Dans un premier exemple de réalisation, l'émetteur 21 comporte deux diodes laser Dₛ et D_{g} ("s" comme initiale de "site", et "g" comme initiale de "gisement") qui émettent une lumière cohérente, par exemple polarisée rectilignement à la longueur d'onde de 1,5 µm et à la cadence de 3 kHz. Les surfaces émettrices ont comme valeurs, dans l'exemple de réalisation, respectivement Lₛ = 5 µm et L_{g} = 150 µm.

Les diodes Dₛ et D_{g} sont placées au foyer d'une lentille de collimation 27 de focale f par interposition d'un cube séparateur de polarisation 26. Un tel cube se compose classiquement de deux demi cubes réunis selon une surface diagonale 260 à travers une lame séparatrice de polarisation.

Afin de balayer tout le champ d'analyse, les diodes D_{g} et Dₛ sont montées sur des supports 28 et 29 mobiles selon les deux axes perpendiculaires X et Y, les supports étant entraînés par des moteurs pas à pas M_{g} et Mₛ. Pour assurer un couplage optimum, les deux diodes sont positionnées perpendiculairement l'une par rapport à l'autre.

Les fréquences et les pas de déplacement des diodes Dₛ et D_{g} disposées dans le plan de focalisation de la lentille 27, sont calculées pour que, par exemple, le déplacement se fait par pas élémentaire égal à Lₛ sur un domaine d'excursion égal à L_{g.} Dans ces conditions, des faisceaux élémentaires sont successivement et périodiquement émis
- d'une part, selon une ligne de direction X émise par la diode Dₛ balayée périodiquement dans la direction y, selon une amplitude égale à θₐₛ et selon un pas égal à θ_{ds},
- et, d'autre part, selon une ligne de direction Y émise par la diode D_{g} balayée périodiquement dans la direction Y selon une amplitude égale à θ_{a.} et un pas égal à θ_{d}

Les champs d'émission élémentaires, respectivement θ_{ds}, θ_{ag}, et θ _{dg}, θₐₛ s'étendent sensiblement le long des deux axes X et Y perpendiculaires, et ont pour valeurs d'ouverture par exemple θ _{dg} = θ_{ds} = Lₛ/f = 0,5 mrd et θₐₛ = θ_{ag} =L_{g}/f = 15 mrd, pour f = 10 mm.

A chaque position, les diodes Dₛ et D_{g} émettent alors respectivement dans les champs élémentaires d'ouverture θ_{ag},θ_{ds} et θₐₛ, θ_{dg} un numéro d'affectation spécifique codé par exemple sur 10 bits. Un tel codage, effectué par un signal adapté par le boîtier 25 à la commande (non représentée) des diodes Dₛ et D_{g} est classique et n'est pas développé ici.

Le champ d'analyse CA d'ouverture θₐₛ, θ_{ag} est ainsi balayé par un faisceau élémentaire défini par l'intersection entre les deux faisceaux émis par les diodes Dₛ et D_{g}, et codé à l'aide de séries d'impulsion laser émises par les diodes dans le champ élémentaire d'ouverture discriminante (θ_{ds}, θ_{dg}). Le code ainsi transmis est avantageusement un code de localisation du champ élémentaire par rapport à la position de l'interrogateur.

Compte-tenu de la cadence d'émission des diodes et du nombre de bits par pas, l'émetteur de désignation fournit alors à la cible amie située dans le champ de désignation, sa position angulaire par rapport à l'interrogateur avec une précision θ_{ds} , θ_{dg} à la cadence de 10 Hz.

Au niveau de la cible amie à identifier, le répondeur R comporte un récepteur 31, qui permet la réception optique de la désignation laser, et un réémetteur 32 constituant un poste de réponse réémetteur. Le récepteur 31 est composé de N modules de réception, chaque module comprenant un détecteur 33 et éventuellement une lentille 34. Un tel récepteur permet alors une réception dans un champ de 360°/N en gisement. Dans l'exemple de réalisation N est égal à 4, le champ en gisement valant alors 90° et le champ en site 30°.

Le récepteur 31 et le réémetteur 32 sont couplés l'un à l'autre par un boîtier d'analyse et de gestion 35, du même type que celui qui équipe l'interrogateur. Le récepteur 31 fournit au boîtier 35 un signal correspondant au flux d'impulsions laser reçu et le boîtier 35 traduit ce signal en un numéro de localisation dont la valeur est communiquée au réémetteur.

Le réémetteur 32 est constitué préférentiellement par un poste de radio de type PR4G. Mais il peut également être constitué par un radar, par un système optique, par exemple un coin de cube, qui réémet le faisceau laser reçu en le modulant. La modulation, réalisée par exemple par une lame électro-optique périodiquement activée par le boîtier d'analyse, permet de surcoder le faisceau reçu et ainsi réémis vers l'interrogateur.

Les procédures d'interrogation/réponse sont classiques et ne sont donc pas détaillées. Un exemple de procédure est donné ci-après pour illustrer une mise en oeuvre simple de l'exemple de réalisation qui vient d'être décrit :
- l'interrogateur visualise des cibles potentielles par son dispositif de visualisation 23 et engage une procédure d'identification ;
- pour cela il émet, à partir de son poste radio équipé d'une antenne A1, une demande codée d'identification et engage une désignation fine des cibles par son émetteur de désignation laser 21 ;
- chacune des cibles amies est équipée d'un récepteur optique 31 et retransmet un numéro de localisation codé sur 10 bits, avec sa réponse d'identification, à partir de l'antenne A2 de son poste radio PR4G ;
- l'interrogateur localise ainsi, avec un pouvoir discriminant θ _{dg} = θ_{ds} = 0,5 mrd, les différentes cibles amies ou ennemies.

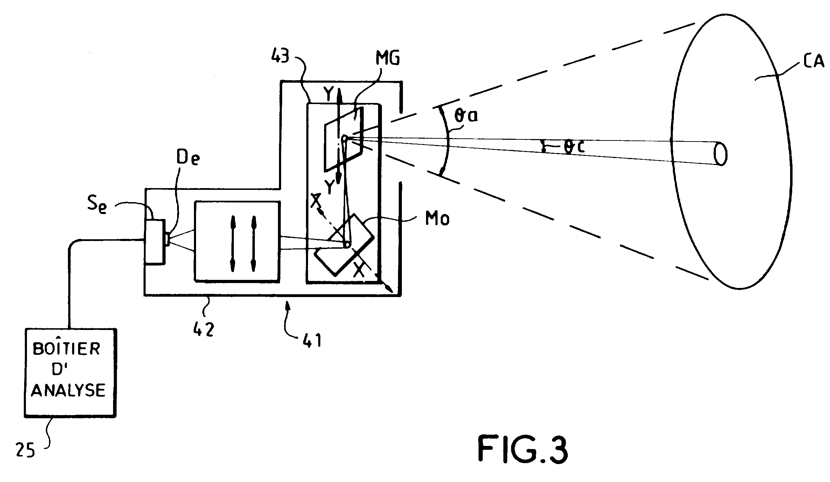

Un autre mode de réalisation de l'émetteur de désignation laser du système IFF selon l'invention est illustré à la figure 3.

L'émetteur 41 comporte une diode laser D_{e,} disposée sur un support Sₑ un groupe optique de collimation 42 et un dispositif classique de balayage 43 des axes X et Y constitué, par exemple, par un type miroir galvanométrique MG associé à un miroir oscillant MO. Les moteurs d'entraînement (non représentés) sont commandés par le boîtier d'analyse 25.

L'émetteur de désignation laser 41 émet une série d'impulsions laser dans un cône θ_{e,}moins discriminant que dans le mode de réalisation précédent (θₑ étant égal par exemple à 3θ_{ds} = 3θ_{dg}). Le dispositif de déflexion 43 réalise alors un balayage du cône d'émission θₑ sur tout le champ d'analyse _{CA,} avec un pas correspondant à l'ouverture θₑ. ayant une cadence donné à chaque position, la série d'impulsions codée, émise à la cadence du balayage, comprend la demande d'identification ainsi qu'un numéro de positionnement.

Un tel émetteur illumine le même champ d'analyse d'ouverture θ_{as,} θ_{ag} que dans l'exemple de réalisation précédent, et permet de fournir une localisation aux cibles amies avec un même pouvoir de discrimination d'ouverture θ_{ds,} θ_{dg,} si une information supplémentaire relative à l'intensité du flux reçu, éventuellement par plusieurs cibles, est exploitée.

Ceci est rendu possible lorsque chacune des cibles amies est équipée d'un récepteur du type de celui décrit précédemment, et d'un boîtier d'analyse pouvant fournir au réémetteur, outre un numéro de positionnement, une information sur l'amplitude du signal optique délivré par le récepteur, à partir du flux reçu par celui-ci.

Dans une procédure d'identification, chacune des cibles renvoie alors, en utilisant le poste de réponse non directif du type PR4G précédent, les numéros de positionnement qu'elles ont reçues, ainsi que l'amplitude du signal associée, et un message d'identification. L'information sur l'amplitude du signal optique est élaboré très classiquement par le boîtier d'analyse et de gestion 35 à partir de la valeur de l'intensité du flux reçu.

L'interrogateur reçoit sur son poste PR4G, les messages de réponse. Pour chacune des cibles amies, il peut effectuer à l'aide de son boîtier d'analyse et de gestion, une pesée des différentes amplitudes associées aux différents numéros de positionnement par comparaison entre les différentes valeurs transmises. Une telle pesée permet de déduire sans ambiguïté la position angulaire de la cible amie interrogée correspondant à l'amplitude la plus élevée, avec une précision suffisante pour satisfaire à l'exigence de discrimination θ_{ds·,}θ_{dg}

L'invention n'est pas limitée aux exemples de réalisation décrits et représentés. Afin de s'affranchir, dans l'émetteur de désignation laser, d'un système de déflexion ou de déplacement associé aux diodes laser, il est possible d'utiliser une matrice de diodes laser dans le plan de focalisation de la lentille de collimation du premier exemple de réalisation précédent. Les distances entre les diodes sont telles que chaque diode, émet un faisceau de désignation discriminant élémentaire, l'ensemble de ces faisceaux occupant le champ d'analyse.

L'utilisation d'une barrette de diodes laser associée à un support déplaçable en translation selon une direction perpendiculaire à la direction principale de la barrette constitue également une solution alternative. Le balayage suivant l'autre axe peut, par exemple, être alors réalisé soit par une émission séquentielle des diodes soit par une inversion alternée des diodes de rang pair et impair.

De plus, l'émetteur de désignation laser peut en outre servir de télémètre et fournir aux cibles amies une information de distance par un codage approprié du même type que celui lié au positionnement. Il suffit de disposer d'une voie de réception sur l'interrogateur et d'un dispositif de traitement adapté.

D'autre part, l'émetteur de désignation laser peut procéder à l'interrogation à la place du poste non directif PR4G, en plus de sa fonction de désignation. Il peut également assurer une communication laser de synchronisation entre les postes non directifs d'interrogation et de réponse.

Par ailleurs, le système d'identification selon l'invention peut être utilisé pour réaliser une simple communication optique à distance.

## Revendications

1. Système d'identification de type ami-ennemi à haut pouvoir discriminant, comportant au moins un interrogateur (I) équipé d'un émetteur de désignation (21, 41) à ondes cohérentes pour désigner une cible parmi celles d'un champ d'observation donné et d'un poste d'interrogation, l'émetteur étant couplé au poste d'interrogation (22) par l'intermédiaire d'un boîtier d'analyse (25) des données échangées avec lesdits émetteur et poste au moins un répondeur (R) situé sur la cible désignée et comprenant un récepteur (31) d'ondes cohérentes et un poste de réponse (32) couplé audit récepteur par l'intermédiaire d'un boîtier d'analyse (35) pour répondre à l'interrogateur (I), et des signaux codés de communication transmis par des ondes entre l'interrogateur (I) et le répondeur (R) pour réaliser une procédure d'identification, caractérisé en ce que l'émetteur de désignation (21, 41) comporte au moins une diode laser (Dₑ, Dₛ, D_{g}) pour former un faisceau d'émission définissant des champs élémentaires discriminants constituant un champ d'analyse (CA), et en ce que cette diode (Dₑ, Dₛ, D_{g}) émet au moins une série d'impulsions d'émission pour former un codage spécifique associé de chaque champ élémentaire.

2. Système d'identification selon la revendication 1, caractérisé en ce que l'émetteur laser (21) comporte deux diodes laser (Dₛ, D_{g}) placées au foyer d'une lentille de collimation (27) par interposition d'un cube séparateur de polarisation (26), les diodes laser (Dₛ, D_{g}) étant montées sur des supports mobiles (28, 29) selon deux directions perpendiculaires (X, Y) et selon des cadences adaptées pour émettre deux faisceaux d'ouvertures sensiblement perpendiculaire (θ_{ds}, θ_{ag} et θ_{dg},θₐₛ ) formant un faisceau élémentaire dans un champ d'ouverture discriminante (θ_{d}), les diodes (Dₛ, D_{g}) émettant successivement au cours du balayage une série d'impulsions codées pour associer un code spécifique à chaque champ élémentaire discriminant.

3. Système d'identification selon la revendication 2, caractérisé en ce que le code spécifique est un code de localisation du champ élémentaire associé par rapport à la position de l'interrogateur.

4. Système d'identification selon la revendication 1, caractérisé en ce que le poste de réponse (32) du répondeur (R) de la cible désignée et le poste d'interrogation (22) de l'interrogateur (I) sont des postes de radio non directifs.

5. Système d'identification selon la revendication 1, caractérisé en ce que l'émetteur laser (41) ) comporte une diode laser (Dₑ) couplée à un groupe optique de collimation (42) et à un dispositif de balayage (43) pour réaliser un balayage du faisceau émis (θₑ) sur le champ d'analyse (CA), le faisceau (θₑ) occupant une succession de champs élémentaires et chacun de ces champs étant localisé à l'aide de ladite série d'impulsions codées émise à la cadence du pas de balayage du faisceau.

6. Système d'identification selon la revendication 5, caractérisé en ce que le boîtier d'analyse (35) de la cible désignée fournit au poste de réponse (32), outre une information de localisation de la cible et un message d'identification, une information sur l'amplitude du signal optique provenant du récepteur (31) et correspondant à l'intensité du flux lumineux reçu.

7. Système d'identification selon la revendication 1, caractérisé en ce que l'émetteur laser comporte une matrice de diodes laser disposée dans le plan focal d'une lentille de collimation, chaque diode émettant un faisceau de désignation discriminant, l'ensemble de ces faisceaux occupant le champ d'analyse (CA).

8. Système d'identification selon la revendication 1, caractérisé en ce que l'émetteur laser comporte une barrette de diodes laser s'étendant selon une première direction, et associée à un support déplaçable en translation selon une direction perpendiculaire à la première direction.

9. Système d'identification laser selon la revendication 1, caractérisé en ce que l'émetteur laser procède à la désignation et l'interrogation en utilisant plusieurs séries d'impulsions codées pour chaque faisceau élémentaire émis.

## Patentansprüche

1. Identifizierungssystem vom Freund-Feind-Typ mit hohem Unterscheidungsvermögen, mit mindestens einem Frageorgan (I), das einen Bezeichnungssender (21, 41), der kohärente Wellen zur Bezeichnung eines Zielobjekts unter den in einem gegebenen Beobachtungsfeld vorhandenen Objekten aussendet, und eine Abfragestation aufweist, wobei der Sender an die Abfragestation (22) über ein Analysegerät (25) für die mit dem Sender und der Abfragestation ausgetauschten Daten gekoppelt ist, mit mindestens einem Antwortorgan (R), das auf dem bezeichneten Zielobjekt montiert ist und einen Empfänger (31) für kohärente Wellen sowie eine an den Empfänger über ein Analysegerät (35) gekoppelte Antwortstation (32) zur Beantwortung der Anfragen des Frageorgans (I) enthält, und mit kodierten Nachrichtensignalen, die mittels Wellen zwischen dem Frageorgan (I) und dem Antwortorgan (R) zur Durchführung der Identifizierungsprozedur übertragen werden, dadurch gekennzeichnet, daß der Bezeichnungssender (21, 41) mindestens eine Laserdiode (Dₑ, Dₛ, D_{g}) zur Bildung eines Sendestrahls besitzt, um diskriminierende Elementarfelder zu definieren, die ein Analysefeld (CA) bilden, und daß diese Diode (Dₑ, Dₛ, D_{g}) mindestens eine Reihe von Sendeimpulsen aussendet, die eine jedem Elementarfeld zugeordnete spezifische Kodierung bildet.

2. Identifizierungssystem nach Anspruch 1, dadurch gekennzeichnet, daß der Lasersender (21) zwei Laserdioden (Dₛ, D_{g}) enthält, die im Brennpunkt einer Kollimationslinse (27) unter Zwischenfügung eines Polarisationsseparatorwürfels (26) liegen und auf in zwei zueinander senkrechten Richtungen (X, Y) beweglichen Trägern (28, 29) montiert sind, wobei die Bewegungen so abgestimmt sind, daß zwei Strahlen mit im wesentlichen zueinander senkrechten Öffnungswinkeln (θ_{ds}, θ_{ag} und θ_{dg}, θₐₛ) ausgesendet werden, die einen Elementarstrahl in einem diskriminierenden Öffnungsfeld (θ_{d}) bilden, wobei die Dioden (Dₛ, D_{g}) nacheinander während der Bewegung eine Reihe von kodierten Impulsen aussenden, um jedem diskriminierenden Elementarfeld einen spezifischen Kode zuzuordnen.

3. Identifizierungssystem nach Anspruch 2, dadurch gekennzeichnet, daß der spezifische Kode ein Lokalisierungskode des zugeordneten Elementarfeldes bezüglich der Position des Frageorgans ist.

4. Identifizierungssystem nach Anspruch 1, dadurch gekennzeichnet, daß die Antwortstation (32) des Antwortorgans (R) des bezeichneten Zielobjekts und die Abfragestation (22) des Frageorgans (I) ungerichtete Funkstationen sind.

5. Identifizierungssystem nach Anspruch 1, dadurch gekennzeichnet, daß der Lasersender (41) eine Laserdiode (Dₑ) enthält, die mit einer optischen Kollimationsgruppe (42) und einer Abtastvorrichtung (43) gekoppelt ist, um eine Abtastung des Analysefelds (CA) durch den ausgesendeten Laserstrahl (θₑ) zu realisieren, wobei der Strahl (θₑ) nacheinander Elementarfelder besetzt und jedes dieser Felder mithilfe der Reihe von kodierten Impulsen lokalisiert wird, die im Rhythmus der Abtastschritte des Strahls ausgesendet werden.

6. Identifizierungssystem nach Anspruch 5, dadurch gekennzeichnet, daß das Analysegerät (35) des bezeichneten Zielobjekts der Antwortstation (32) außer einer Lokalisierungsinformation betreffend das Zielobjekt und einer Identifizierungsnachricht eine Information bezüglich der der Intensität des empfangenen Lichtflusses entsprechenden Amplitude des vom Empfänger (31) kommenden optischen Signals liefert.

7. Identifizierungssystem nach Anspruch 1, dadurch gekennzeichnet, daß der Lasersender in der Brennebene einer Kollimationslinse eine Laserdiodenmatrix aufweist, von der jede Diode einen diskriminierenden Bezeichnungsstrahl aussendet, wobei diese Strahlen gemeinsam das Analysefeld (CA) abdecken.

8. Identifizierungssystem nach Anspruch 1, dadurch gekennzeichnet, daß der Lasersender eine Laserdiodenleiste aufweist, die sich in einer ersten Richtung erstreckt und auf einem Träger sitzt, der translatorisch in einer zur ersten Richtung senkrechten Richtung verschiebbar ist.

9. Identifizierungssystem nach Anspruch 1, dadurch gekennzeichnet, daß der Lasersender die Bezeichnung und Abfrage durchführt, indem er mehrere Reihen von kodierten Impulsen für jeden ausgesendeten Elementarstrahl verwendet.

## Claims

1. Identification system of the IFF type having high discriminating power, including at least one interrogator (I) equipped with a coherent-wave designation emitter (21, 41) for designating one target among those of a given observation field, and an interrogation station, the emitter being coupled to the interrogation station (22) by means of a unit (25) for analysing the data exchanged with the said emitter and station, at least one responder (R) which is located on the designated target and comprises a coherent-wave receiver (31) and a response station (32) coupled to the said receiver by means of an analysis unit (35) in order to respond to the interrogator (I), and coded communication signals transmitted by waves between the interrogator (I) and the responder (R) in order to perform an identification procedure, characterized in that the designation emitter (21, 41) includes at least one laser diode (Dₑ, Dₛ, D_{g}) for forming an emission beam defining elementary discriminant fields constituting an analysis field (CA), and in that this diode (Dₑ, Dₛ, D_{g}) emits at least one series of emission pulses for forming specific coding associated with each elementary field.

2. Identification system according to Claim 1, characterized in that the laser emitter (21) includes two laser diodes (Dₛ, D_{g}) which are placed at the focus of a collimation lens (27) with interposition of a polarization splitter cube (26), the laser diodes (Dd, Da) being mounted on supports (28, 29) which move in two perpendicular directions (X, Y) and at rates designed for emitting two beams of substantially perpendicular apertures (θ_{ds}, θ_{ag} and θ_{dg}, θₐₛ) forming an elementary beam in a field of discriminant aperture (θ_{d}), the diodes (Dₛ, D_{g}) successively emitting a series of coded pulses during scanning in order to associate a specific code with each elementary discriminant field.

3. Identification system according to Claim 2, characterized in that the specific code is a code for locating the associated elementary field with respect to the position of the interrogator.

4. Identification system according to Claim 1, characterized in that the response station (32) of the responder (R) of the designated target and the interrogation station (22) of the interrogator (R) are non-directional radio stations.

5. Identification system according to Claim 1, characterized in that the laser emitter (41) includes a laser diode (De) coupled to an optical collimation assembly (42) and to a scanning device (43) for scanning the emitted beam (θₑ) over the analysis field (CA), the beam (θₑ) occupying a succession of elementary fields, and each of these fields being located with the aid of the said series of coded pulses emitted at the rate of the scanning interval of the beam.

6. Identification system according to Claim 5, characterized in that the analysis unit (35) of the designated target supplies the response station (32), further to target location information and an identification message, with information regarding the amplitude of the optical signal originating from the receiver (31) and corresponding to the intensity of the received light flux.

7. Identification system according to Claim 1, characterized in that the laser emitter includes a matrix of laser diodes which is arranged in the focal plane of a collimation lens, each diode emitting a discriminant designation beam, this set of beams together occupying the analysis field (CA).

8. Identification system according to Claim 1, characterized in that the laser emitter includes a linear array of laser diodes which extends in a first direction and is associated with a support which can be moved in translation in a direction perpendicular to the first direction.

9. Laser identification system according to Claim 1, characterized in that the laser emitter performs the designation and interrogation by using a plurality of series of coded pulses for each emitted elementary beam.
